# EUROPÄISCHE PATENTANMELDUNG

(11) **EP 2 109 023 A2**
(43) Veröffentlichungstag der Anmeldung: **14.10.2009**
(21) Anmeldenummer: 09005093.1
(22) Anmeldetag: 07.04.2009
(51) Int. Cl.: G05D 23/19

(54) **Steuereinrichtung für mindestens eine Heiz-, Klimatisierungs-, Lüftungs-oder Kühleinrichtung**

(30) Priorität: 12.04.2008 DE 102008018588
(71) Anmelder: Danfoss A/S, 6430 Nordborg (DK)
(72) Erfinder: Kühne, Eva, 8600 Silkeborg (DK); Frederiksen, Bjarne, 8632 Lemming (DK); Clausen, Anders Østergaard, 8680 Ry (DK)

(57) **Zusammenfassung**

Es wird eine Steuereinrichtung für mindestens eine Heiz-, Klimatisierungs-, Lüftungs- oder Kühleinrichtung angegeben mit einem Speicher für ein Temperatursteuerprogramm und einem Signalausgang.

Man möchte die Programmierung erleichtern.

Hierzu ist vorgesehen, dass der Speicher in einem eine Kommunikationsschnittstelle (6) aufweisenden, aus der Steuereinrichtung entnehmbaren Element (5) angeordnet ist, wobei die Kommunikationsschnittstelle (6) mit einer externen Eingabeeinrichtung verbindbar ist und die Steuereinrichtung (1) eine elektrische Energieversorgungseinrichtung (3) aufweist, mit der elektrische Energie auf das Element (5) übertragbar ist.

## Beschreibung

Die Erfindung betrifft eine Steuereinrichtung für mindestens eine Heiz-, Klimatisierungs-, Lüftungs- oder Kühleinrichtung mit einem Speicher für ein Temperatursteuerprogramm und einem Signalausgang.

Die Erfindung wird im Folgenden anhand einer Heizeinrichtung mit einem Heizkörper beschrieben. Sie ist aber in prinzipiell gleicher Weise auch bei einer Kühleinrichtung anwendbar, bei der ein Wärmetauscher mit einem gekühlten Fluid versorgt wird, um Wärme aus der Umgebung aufzunehmen, oder bei einer Lüftungseinrichtung, die programmgesteuert unterschiedliche Luftmengen fördert. Auch der Einsatz in einer Klimatisierungseinrichtung ist möglich, bei der weitere Parameter programmgesteuert beeinflusst werden.

Heizkörper weisen grundsätzlich Heizkörperventile auf. Üblich ist dabei auch, dass die Heizkörperventile durch einen Thermostataufsatz gesteuert werden. In jüngerer Zeit ist diese Steuerung dahingehend erweitert worden, dass der Sollwert für den Thermostataufsatz programmgesteuert verändert werden kann. Hierzu weist der Thermostataufsatz beispielsweise einen kleinen Elektromotor auf, der die Position eines Thermostatelements innerhalb des Thermostataufsatzes verändert oder der ein Ventilelement direkt bewegt. Mit einer derartigen Heizeinrichtung lässt sich dann ein Temperaturprogramm abarbeiten, bei dem man beispielsweise in der Nacht die Raumtemperatur um einige Grad absenkt und tagsüber erhöht. Bei aufwendigeren Steuerungen kann man auch Wochentage in das Temperaturprogramm mit einbeziehen, so dass man die Nachtabsenkung am Wochenende später beginnen lässt als an Werktagen. Dem Benutzer wird für die Programmierung der Heizeinrichtung eine relativ große Freiheit eingeräumt.

Allerdings hat diese Freiheit den Nachteil, dass die Programmierung für den Benutzer relativ aufwendig wird.

Der Erfindung liegt die Aufgabe zugrunde, die Programmierung zu erleichtern.

Diese Aufgabe wird bei einer Steuereinrichtung der eingangs genannten Art dadurch gelöst, dass der Speicher in einem eine Kommunikationsschnittstelle aufweisenden, aus der Steuereinrichtung entnehmbaren Element angeordnet ist, wobei die Kommunikationsschnittstelle mit einer externen Eingabeeinrichtung verbindbar ist und die Steuereinrichtung eine elektrische Energieversorgungseinrichtung aufweist, mit der elektrische Energie auf das Element übertragbar ist.

Mit dieser Ausgestaltung ist es nun nicht mehr erforderlich, die Programmierung unmittelbar am Heizkörper oder an einer anderen mit dem Heizkörper signalmäßig verbundenen Einheit vorzunehmen. Man kann vielmehr das Element, das den Speicher aufweist, aus der Steuereinrichtung entnehmen und mit der externen Eingabeeinrichtung verbinden. Die externe Eingabeeinrichtung erlaubt einen höheren Komfort bei der Eingabe eines Temperatursteuerprogramms. Wenn die Programmierung abgeschlossen ist, d.h. die Daten für das Temperatursteuerprogramm eingegeben und im Speicher abgelegt sind, dann kann die Verbindung zwischen dem Element und der Eingabeeinrichtung wieder gelöst werden und das Element wird in die Steuereinrichtung eingesetzt. In dieser Position wird elektrische Energie auf das Element übertragen, so dass das Element mit seiner gesamten Elektronik genügend Versorgungsleistung erhält, um bestimmungsgemäß arbeiten zu können. Das externe Eingabegerät muss dann nicht mehr weiterarbeiten, sondern kann abgeschaltet werden.

Vorzugsweise ist die externe Eingabeeinrichtung als Computer, insbesondere als Personalcomputer, ausgebildet. Ein Personalcomputer, der auch als Laptop, Notebook oder dergleichen ausgebildet sein kann, ist für viele Benutzer verfügbar. Man kann dann das Element mit dem Computer verbinden, wofür die Kommunikationsschnittstelle genutzt werden kann, die Daten für das Temperatursteuerprogramm eingeben und das Element wieder in die Steuereinrichtung einsetzen. Bei einem Computer, der mit einer Tastatur, einer Maus oder einer anderen Eingabeeinrichtung und einem Bildschirm versehen ist, lässt sich die Eingabe von Daten relativ leicht vornehmen.

Hierbei ist bevorzugt, dass der Speicher ein auf dem Computer ausführbares Programm enthält, mit dessen Hilfe Daten des Temperatursteuerprogramms eingebbar sind. Das ausführbare Programm kann beispielsweise auf dem Bildschirm des Computers Masken darstellen, in die der Benutzer seine gewünschten Daten eingeben kann. Beispielsweise kann der Benutzer eingeben, von welcher Uhrzeit bis zu welcher Uhrzeit welche Solltemperatur erreicht werden soll. Wenn das Programm im Speicher des Elements abgelegt ist, dann muss man dieses Programm nicht vorher auf dem Computer installieren. Nach dem Entfernen des Elements vom Computer ist, falls dies gewünscht ist, nicht mehr erkennbar, dass das Programm auf dem Computer ausgeführt worden ist.

Vorzugsweise weist das Element eine einstellbare Uhr auf. Die Uhr kann beispielsweise eingestellt werden, wenn das Element mit dem Computer verbunden wird. Der Begriff "Uhr" umfasst in einer erweiterten Fassung auch einen ganzen Kalender, so dass man auch Sonn- und Feiertage bei der Erfassung der Daten des Temperatursteuerprogramms oder eine automatische Umstellung zwischen Sommerzeit und Winterzeit berücksichtigen kann.

Vorzugsweise ist die Kommunikationsschnittstelle als USB-Schnittstelle ausgebildet. Eine USB-Schnittstelle (Universal Serial Bus) steht in vielen Computern zur Verfügung. Eine USB-Schnittstelle ist nicht nur in der Lage, Daten vom Element auf den Computer und umgekehrt zu übertragen. Sie ist in der Regel auch in der Lage, elektrischen Strom vom Computer auf das Element zu übertragen, so dass das Element mit elektrischer Betriebsenergie versorgt wird, wenn es am Computer angedockt ist.

Vorzugsweise ist die Kommunikationsschnittstelle zur Übertragung von elektrischer Energie mit der elektrischen Energieversorgungseinrichtung verbindbar. Wenn man das Element in die Steuereinrichtung einsteckt, dann kommt es automatisch mit der elektrischen Energieversorgungseinrichtung in Verbindung, so dass die elektrische Energieversorgungseinrichtung die für den Betrieb notwendige elektrische Energie fortlaufend zur Verfügung stellen kann. Dies ist bei einer USB-Schnitt-stelle in besonders einfachem Maße möglich.

Vorzugsweise weist das Element eine Sendeeinrichtung für eine leitungslose Signalübertragung auf, die mit dem Signalausgang verbunden ist. Wenn man eine Sendeeinrichtung verwendet, dann ist eine mechanische oder leitungsmäßige Verbindung zwischen der Steuereinrichtung und dem von der Steuereinrichtung betätigten Heizkörperventil nicht mehr erforderlich. Die Steuereinrichtung ist sogar in der Lage, mehrere Heizkörperventile gleichzeitig zu steuern, was insbesondere dann von Vorteil ist, wenn mehrere Heizkörperventile gleichartig gesteuert werden sollen. Wenn man einzelne Heizkörper mit ihren Thermostataufsätzen adressieren kann, dann ist die Steuereinrichtung auch in der Lage, bei unterschiedlichen Heizkörpern unterschiedliche Temperatursteuerprogramme zu fahren. Auch diese unterschiedlichen Temperatursteuerprogramme können dann mit Hilfe der externen Eingabeeinrichtung eingegeben werden. Die Sendeeinrichtung weist beispielsweise einen Sender und eine Antenne auf. Als leitungslose Signalübertragung kann man beispielsweise ein "Z-wave"-System verwenden, das von der Zensys A/S, 2100 Kopenhagen, Dänemark, vertrieben wird. Andere Übertragungssysteme sind natürlich möglich.

Vorzugsweise ist das Element in ein Gehäuse einsteckbar, in dem die elektrische Energieversorgungseinrichtung angeordnet ist. Das Gehäuse bietet einerseits einen gewissen Schutz und fasst andererseits im betriebsbereiten Zustand die elektrische Versorgungseinrichtung und das Element zusammen. Die Gefahr, dass durch von außen wirkende Kräfte eine Beschädigung erzeugt wird, beispielsweise im Bereich der Verbindung zwischen der elektrischen Versorgungseinrichtung und dem Element, ist vergleichsweise klein.

Hierbei ist bevorzugt, dass das Gehäuse mindestens ein von außen bedienbares Betätigungselement aufweist. Manchmal kann es gewünscht sein, das Temperatursteuerprogramm zu übersteuern. Beispielsweise möchte man die Nachabsenkung außer Kraft setzen, wenn man längere Zeit mit Freunden abends zusammensitzt, oder man möchte eine zusätzliche Absenkung der Temperatur bewirken, wenn man den Raum für längere Zeit verlässt. Hierzu ist das von außen zugängliche Betätigungselement vorgesehen.

Hierbei ist bevorzugt, dass das Betätigungselement mit einer Betätigungseinrichtung im Element zusammenwirkt. Das Betätigungselement im Gehäuse hat also ausschließlich die Funktion einer mechanischen Übertragung. Die Änderung des Betriebszustandes ergibt sich dann durch die Wirkung der Betätigungseinrichtung im Element, die wiederum vom Betätigungselement betätigt wird.

Die Erfindung wird im Folgenden anhand eines bevorzugten Ausführungsbeispiels in Verbindung mit der Zeichnung beschrieben. Hierin zeigen:
- Fig. 1: eine Steuereinrichtung von außen und
- Fig. 2: eine Steuereinrichtung mit wesentlichen Elementen im auseinander gebauten Zustand.

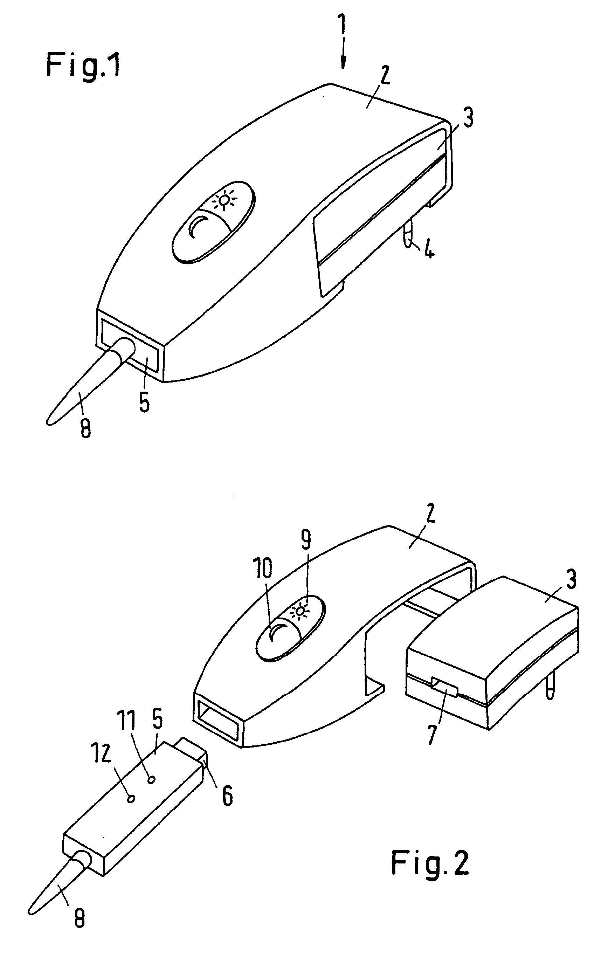

Fig. 1 zeigt eine Steuereinrichtung 1 für eine nicht näher dargestellte Heiz-, Klimatisiemngs-, Lüftungs- oder Kühleinrichtung.

Die Steuereinrichtung 1 weist ein Gehäuse 2 auf, in dem eine Energieversorgungseinrichtung 3 angeordnet ist, die über ein elektrisches Anschlusskabel 4 beispielsweise mit einer Steckdose einer elektrischen Hausinstallation verbunden werden kann.

Im Gehäuse 2 ist ferner ein Element 5 angeordnet, das (Fig. 2) einen USB-Stecker 6 aufweist, der in eine USB-Buchse 7 an der elektrischen Energieversorgungseinrichtung 3 eingesteckt werden kann, wenn sich das Element 5 in der in Fig. 1 dargestellten Position befindet, d.h. im Gehäuse 2 eingesteckt ist.

Wenn das Element 5 im Gehäuse 2 angeordnet ist und der USB-Stecker 6 in die USB-Buchse 7 eingesteckt ist, dann ist die elektrische Energieversorgungseinrichtung 3 in der Lage, das Element 5 mit der notwendigen elektrischen Betriebsspannung zu versehen, die es für den bestimmungsgemäßen Betrieb benötigt. In diesem Zustand ist die mit Hilfe des USB-Steckers 6 und der USB-Buchse 7 gebildete USB-Schnittstelle zu keinen weiteren Aufgaben notwendig.

Das Element 5 weist eine Antenne 8 auf, die mit einem Sender verbunden ist, der im Inneren des Elements 5 angeordnet ist. Die Antenne 8 und der Sender bilden eine Sendeeinrichtung, die beispielsweise nach dem "Z-wave"-System der Firma Zensys A/S, Kopenhagen, Dänemark, arbeitet. Über die Antenne 8 kann das Element 5 Signale zu Ventilsteuereinrichtungen senden, die an Heizkörpern oder Kühleinrichtungen angeordnet sind, um diese Ventile ferngesteuert einzustellen oder auch nur ferngesteuert Sollwerte vorzugeben.

Wenn das Element 5, wie in Fig. 2 dargestellt, aus dem Gehäuse 2 entnommen ist, dann kann es mit dem USB-Stecker 6 in eine USB-Schnittstelle eines nicht näher dargestellten Computers, beispielsweise eines Personalcomputers, eingesteckt werden. Sobald es dort einge-steckt ist, wird ein Programm, das im Element 5 gespeichert ist, auf dem Computer ausgeführt. Dabei werden beispielsweise Eingabemasken angezeigt, in die der Benutzer Daten für sein gewünschtes Temperaturprofil eingeben kann. Beispielsweise kann er Zeiten angeben, in denen er eine Nachtabsenkung wünscht, und die dazugehörige Temperatur. Der Computer kann seinerseits die Uhrzeit und den aktuellen Wochentag auf das Element 5 übertragen. Diese Übertragung kann automatisch erfolgen, ohne dass der Benutzer eine Handlung vornehmen muss.

Der im Element 5 enthaltene Speicher kann natürlich auch ein Standardprogramm enthalten, das in der Steuereinrichtung 1 abgearbeitet werden kann, wenn der Benutzer kein eigenes Temperatursteuerprogramm eingegeben hat.

Wenn die gewünschte Programmierung fertig ist, wird das Element 5 aus dem Computer entnommen und im Gehäuse 2 montiert. Das Element 5 kann dann die gewünschten Thermostate autonom steuern.

Wie aus Fig. 2 hervorgeht, ist das Gehäuse 2 C-förmig ausgebildet, wobei die elektrische Energieversorgungseinrichtung 3 seitlich in das Gehäuse 2 eingeschoben und dann durch Einstecken des Elements 5 durch einen Schenkel des "C" verriegelt wird. Dadurch ergibt sich die in Fig. 1 dargestellte kompakte Außenform.

Das Gehäuse 2 weist noch zwei Tasten 9, 10 auf, die als Betätigungselemente dienen. Anstelle von Tasten 9, 10 kann man natürlich auch andere Betätigungselemente verwenden. Diese Tasten wirken über Öffnungen 11, 12 in das Element 5 hinein. Die Öffnungen 11, 12 können auch durch Membrane oder dergleichen verschlossen sein, so dass das Innere des Elements 5 nach wie vor abgeschlossen ist. Die Tasten 9, 10 haben ausschließlich eine mechanische Übertragungsfunktion. Im Innern des Elements 5 sind dann Betätigungseinrichtungen vorhanden, die das Betriebsverhalten des Elements 5 ändern. Beispielsweise kann man mit der Taste 9 die Nachtabsenkung übersteuern und mit der Taste 10 die Tagtemperatur übersteuern.

Auch ein Batteriebetrieb der Einheit wäre vorstellbar. Im Prinzip benötigt man das Gehäuse 2 nicht, wenn man das Element 5 vollständig in die Energieversorgungseinrichtung 3 einstecken kann.

Die Tasten 9, 10 können auch fembedient sein, so dass keine äußeren, physischen Tasten vorhanden sein müssen.

Ebenfalls vorstellbar ist eine Kommunikation mit dem Element 5 über ein anderes Medium, beispielsweise eine Infrarotverbindung, so dass eine Übersteuerung oder Änderung der Einstellungen beispielsweise mit Hilfe eines mobilen Telefons möglich wäre.

Das Element 5 könnte beispielsweise auch Informationen von einem im Raum angeordneten, drahtlos wirkenden Thermostaten erhalten.

Zweckmäßigerweise kann auch eine kleine Batterie (oder eine andere Art einer Energieversorgung) im Element 5 vorgesehen sein, so dass sichergestellt wird, dass die eingegebenen Daten nicht verschwinden, wenn das Element 5 von der Energieversorgungseinrichtung 3 oder dem Computer abgezogen wird.

Das Element 5 kann selbstverständlich auch dann verwendet werden, wenn es im Computer eingesteckt ist. In diesem Fall sollte aber der Computer immer eingeschaltet sein.

## Patentansprüche

1. Steuereinrichtung für mindestens eine Heiz-, Klimatisierungs-, Lüftungs- oder Kühleinrichtung mit einem Speicher für ein Temperatursteuerprogramm und einem Signalausgang, **dadurch gekennzeichnet, dass** der Speicher in einem eine Kommunikationsschnittstelle (6) aufweisenden, aus der Steuereinrichtung entnehmbaren Element (5) angeordnet ist, wobei die Kommunikationsschnittstelle (6) mit einer externen Eingabeeinrichtung verbindbar ist und die Steuereinrichtung (1) eine elektrische Energieversorgungseinrichtung (3) aufweist, mit der elektrische Energie auf das Element (5) übertragbar ist.

2. Steuereinrichtung nach Anspruch 1, **dadurch gekennzeichnet, dass** die externe Eingabeeinrichtung als Computer, insbesondere als Personalcomputer, ausgebildet ist.

3. Steuereinrichtung nach Anspruch 2, **dadurch gekennzeichnet, dass** der Speicher ein auf dem Computer ausführbares Programm enthält, mit dessen Hilfe Daten des Temperatursteuerprogramms eingebbar sind.

4. Steuereinrichtung nach einem der Ansprüche 1 bis 3, **dadurch gekennzeichnet, dass** das Element (5) eine einstellbare Uhr aufweist.

5. Steuereinrichtung nach einem der Ansprüche 1 bis 4, **dadurch gekennzeichnet, dass** die Kommunikationsschnittstelle (6) als USB-Schnittstelle ausgebildet ist.

6. Steuereinrichtung nach einem der Ansprüche 1 bis 5, **dadurch gekennzeichnet, dass** die Kommunikationsschnittstelle (6) zur Übertragung von elektrischer Energie mit der elektrischen Energieversorgungseinrichtung (3) verbindbar ist.

7. Steuereinrichtung nach einem der Ansprüche 1 bis 6, **dadurch gekennzeichnet, dass** das Element (5) eine Sendeeinrichtung (8) für eine leitungslose Signalübertragung aufweist, die mit dem Signalausgang verbunden ist.

8. Steuereinrichtung nach einem der Ansprüche 1 bis 7, **dadurch gekennzeichnet, dass** das Element (5) in ein Gehäuse (2) einsteckbar ist, in dem die elektrische Energieversorgungseinrichtung (3) angeordnet ist.

9. Steuereinrichtung nach Anspruch 8, **dadurch gekennzeichnet, dass** das Gehäuse (2) mindestens ein von außen bedienbares Betätigungselement (9, 10) aufweist.

10. Steuereinrichtung nach Anspruch 9, **dadurch gekennzeichnet, dass** das Betätigungselement (9, 10) mit einer Betätigungseinrichtung im Element (5) zusammenwirkt.
